# EUROPEAN PATENT SPECIFICATION

(11) **EP 2 113 697 B1**
(45) Date of publication and mention of the grant of the patent: **20.07.2011**
(21) Application number: 09005825.6
(22) Date of filing: 27.04.2009
(51) Int. Cl.: F16K 31/60

(54) **Faucet-mixer device comprising at least a spacer element arranged between the handle and the water delivery assembly**
Wasserhahn-Mischvorrichtung mit mindestens einem zwischen dem Griff und der Wasseraustrittsbaugruppe angeordneten Abstandselement
Dispositif de mélange de robinet comportant au moins un élément d'espaceur agencé entre la poignée et l'ensemble de distribution d'eau

(30) Priority: 28.04.2008 IT MI20080154 U
(43) Date of publication of application: 04.11.2009
(73) Proprietor: REMER RUBINETTERIE S.p.A., 20062 Cassano D'Adda (MI) (IT)
(72) Inventor: Repici, Antonio, 20062 Cassano d'Adda (MI) (IT)
(74) Representative: Cicogna, Franco

(56) References cited:
- EP-A2- 1 055 781
- EP-A2- 1 065 420
- WO-A1-91/07615
- US-A- 5 660 208

## Description

The present invention relates to a faucet-mixer device for example disclosed in WO 91/07615, comprising a water elongated delivery assembly and a body, integral or rigid with the water delivery assembly, inside of which is arranged a mixer device driven by an elongated, preferably flat control handle, arranged above the water delivery assembly and very near to said water delivery assembly in an overlapping condition thereof.

Faucet-mixer device of the above disclosed type, which will not be herein further disclosed, since they are well known, allow a user to achieve, at the outlet of the water delivery assembly, a water flow having a desired temperature, by mixing, in the mixing or mixer device, a hot water flow and a cold water flow.

As is known, the user must turn the control handle driving the mixer device on a vertical plane to properly adjust the water amount delivered from the faucet and on a horizontal plane to properly adjust the hot water and cold water ratio and, accordingly, the temperature of the mixed water exiting or delivered by the faucet.

It has been found that, during the above mentioned displacements, if the control handle is arranged close to the delivery assembly and in the overlapping condition thereof, said control handle may friction slide on the delivery assembly, so as to scratch or anyhow damage the latter.

### SUMMARY OF THE INVENTION

The main aim of the present invention is to provide such a faucet-mixer device devoid of the above mentioned drawbacks.

According to one aspect of the present invention, the above mentioned object, as well as yet other objects, which will become more apparent hereinafter, are achieved by a faucet-mixer device including the characterizing features indicated in the independent claim 1.

Further details and characteristics of the invention being shown in the dependent claims.

### BRIEF DESCRIPTION OF THE DRAWINGS

The invention will be disclosed in a more detailed manner hereinafter reference to preferred exemplary embodiments thereof which are shown in the accompanying drawings, where:
Figure 1 shows a schematic perspective exploded view of a first embodiment of a faucet-mixer device according to the invention;
Figure 2 shows a schematic front view (figure 2a) of the faucet-mixer device of figure 1, a cross sectional view thereof (figure 2b) taken along the section plane A-A of figure 2a and further shows, on an enlarged scale, the detail shown in figure 2a (figure 2c);
Figure 3 schematically shows a further perspective exploded view of a second embodiment of a faucet-mixer device according to the present invention;
Figure 4 schematically shows a front view (figure 4a) of the faucet-mixer device of figure 3, as cross-sectioned along the section plane B-B of figure 4b, a cross sectional view thereof (figure 4b) taken along the section plane A-A of figure 4a and further shows, on an enlarged scale, the detail shown in figure 4a (figure 4c);
Figure 5 schematically shows a perspective exploded view of a third embodiment of a faucet-mixer device according to the present invention;
Figure 6 schematically shows a front view (figure 6a) of the faucet-mixer device of figure 5, as cross-sectioned along the section plane B-B of figure 6b, a cross-sectional view thereof (figure 6b) substantially taken along the section plane A-A of figure 6a, and further shows, on an enlarged scale, the detail shown in figure 6a (figure 6c);
Figure 7 schematically shows yet another perspective exploded view of a fourth embodiment of a faucet-mixer device according to the present invention;
   and
Figure 8 schematically shows a front view (figure 8a) of the faucet-mixer device of figure 7, as cross-sectioned along the section plane B-B of figure 8b, a cross-sectional view thereof (figure 8b) substantially taken along the section plane A-A of figure 8a, and further shows, on an enlarged scale, the detail shown in figure 8a (figure 8c);

### DESCRIPTION OF THE PREFERRED EMBODIMENT

In the accompanying drawings, corresponding elements will be indicated by the same number references.

More specifically, the present invention relates to a faucet-mixer device comprising a water elongated delivery assembly and a body, integral or rigid with said water delivery assembly, inside of which is arranged a mixer device driven by an elongated, preferably flat, control handle arranged on the top of the water delivery assembly.

On that surface of said control handle facing the water delivery assembly at least a spacer element preventing the control handle from contacting the water delivery assembly is arranged.

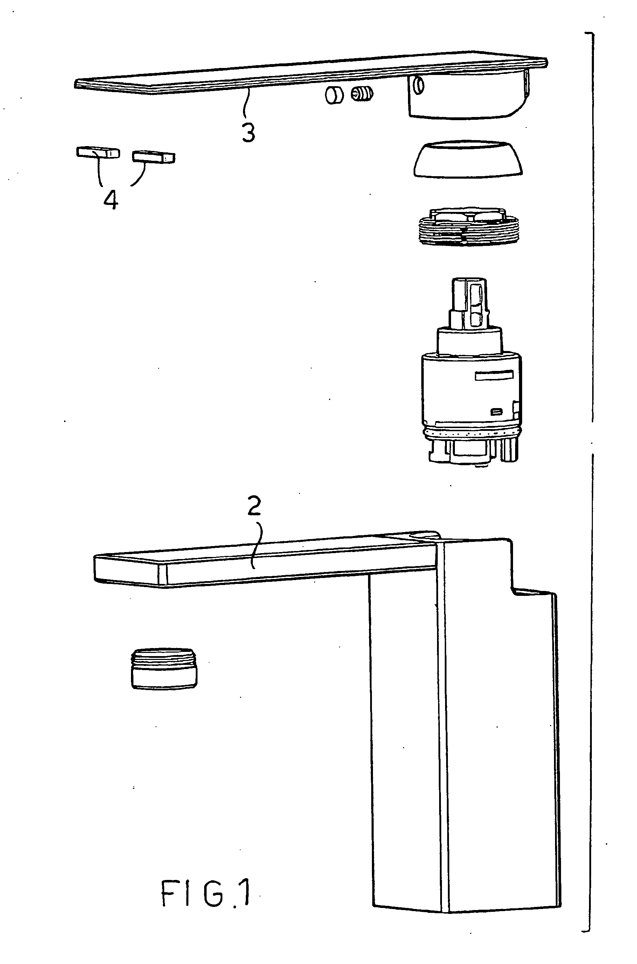

Figure 1 schematically shows a perspective exploded view of a first embodiment of a faucet-mixer device 1 according to the present invention, comprising an elongated water delivery assembly 2 and a body, integral or rigid with said water delivery assembly 2, inside of which is arranged a mixer device driven by an elongated, preferably flat control handle 3, arranged on the top of the water delivery assembly 2.

Said body and mixer device or assembly have not been disclosed or identified by number references accompanying drawing figures, since they are well known per se, and anyhow do pertain to the present invention.

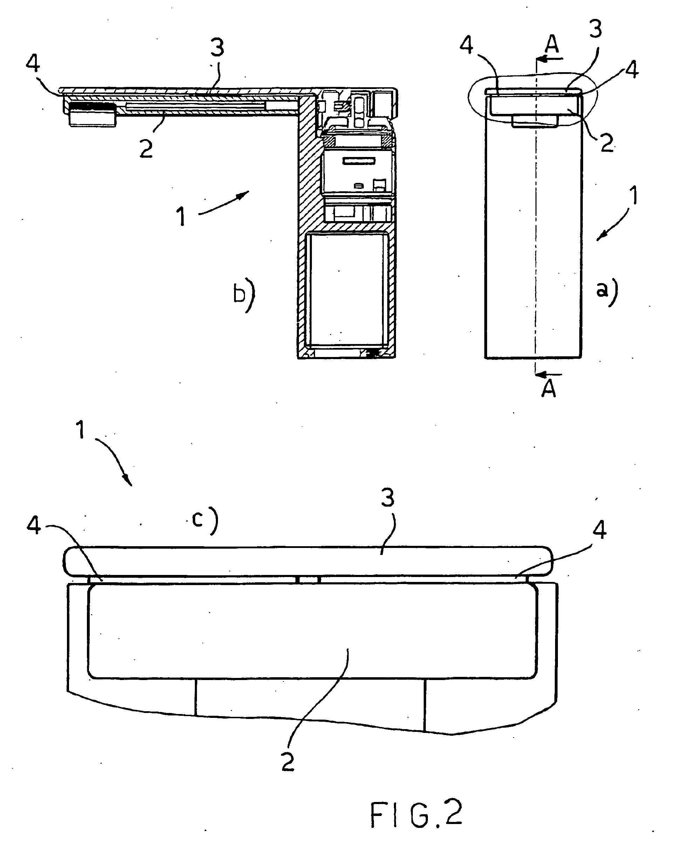

The reference number 4 of figure 1 shows two spacer elements made of a soft material, preferably a soft plastic or rubber material, which, as clearly shown in the enlarged detail of figure 2c, are applied on that surface of the control handle 3 facing the water delivery assembly 2 for preventing said handle 3 from contacting the water delivery assembly 2.

preferably, the two spacer elements 4 have different colors and conventionally indicate the direction the control handle 3 must be turned toward to deliver hot water, respectively cold water.

Figures 1 to 4 show two parallelepiped shape spacer elements 4 but, without :departing from the scope of the invention, it would be possible to apply on that surface of the.control handle 3 facing the water delivery assembly 2 either one or more spacer elements 4 of any desired shapes.

Figure 2 schematically shows a front view (figure 2a) of the faucet-mixer device 1 of figure 1, a cross sectional view (figure 2b) thereof, substantially taken along the section plane A-A of figure 2a and further shows, on an enlarged scale, the detail shown in figure 2a (figure 2c).

From figure 2b it is clearly shown that the water delivery 2 and control handle 3 have a flat configuration and substantially the same length, that the top surface of the water delivery 2 and bottom surface of the handle 3 are parallel to one another as the spacer elements 4 bear on the top surface of the water delivery 2 and that said spacer elements 4, also shown in figure 2a and better shown in the enlarged detail of figure 2c, are clamped to the free end portion of the control handle 3, that is to that end portion of the handle 3 which is not coupled to the mixer device or assembly.

Figure 2c schematically shows, on an enlarged scale, the detail shown in figure 2a whereas in figure 2c are clearly shown the spacer elements 4 arranged between the water delivery assembly 2 and control handle 3 and clamped to the free end portion of the handle 3.

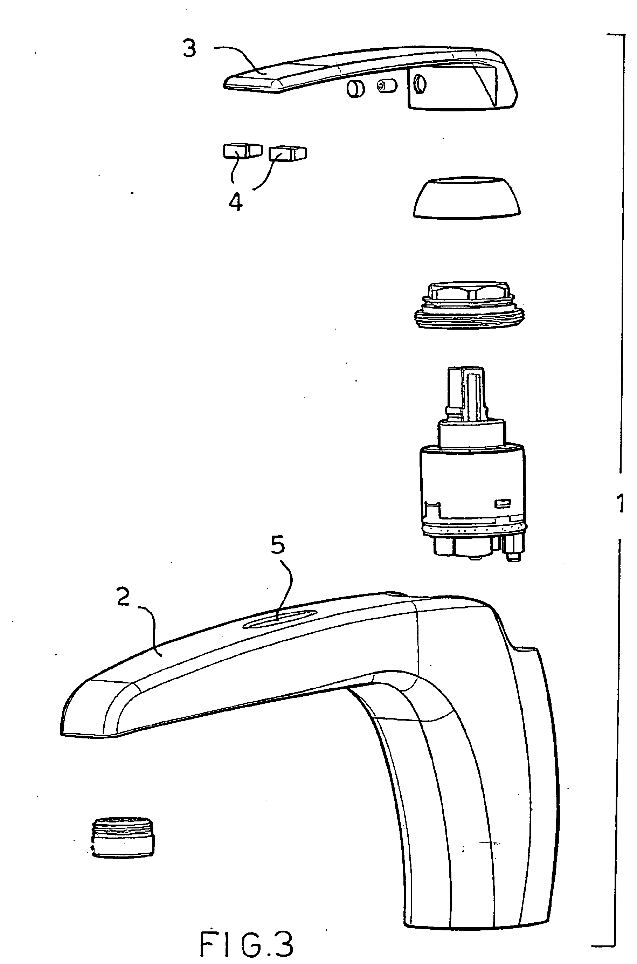

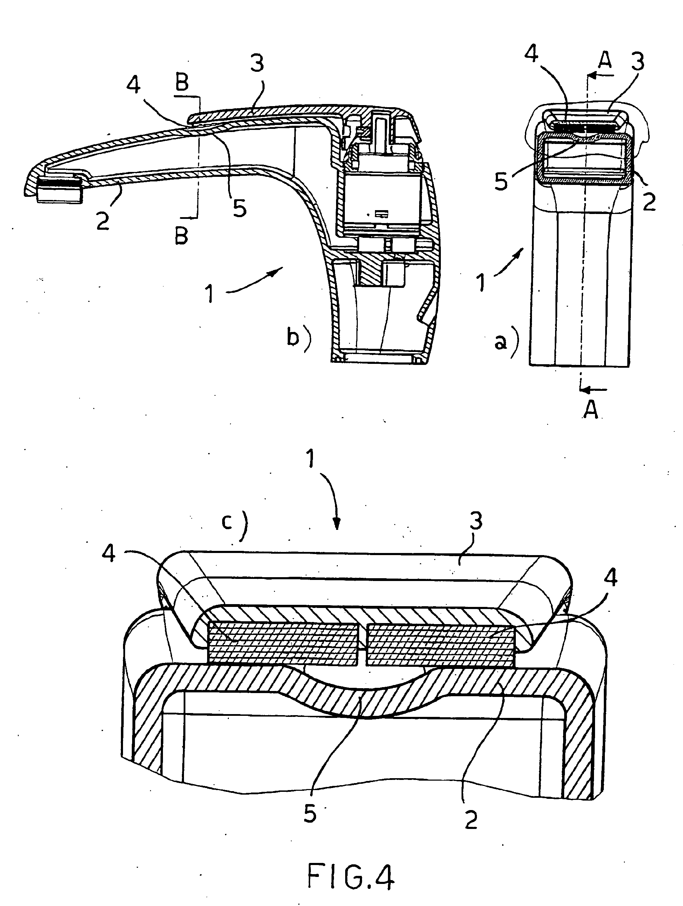

Figure 3 schematically shows a perspective exploded view of a second embodiment of a faucet-mixer device 1 according to the present invention, differing from the above disclosed first embodiment thereof essentially by the fact that the top surface of the water delivery 2 and bottom surface of the handle 3 are curved and that said handle 3 has a length smaller than that of the delivery assembly 2, as is better shown in figure 4b.

Preferably, on the top surface of the water delivery 2 is provided a recess 5, better shown in figure 4c, allowing a user to easily access the free end portion of the control handle 3.

Figure 4 schematically shows a front view (figure 4a) of the faucet-mixer device 1 of figure 3, as cross-sectioned according to the section plane B-B of figure 4b, a cross sectional view (figure 4b) thereof substantially taken along the section plane A-A of figure 4a and further shows, on an enlarged scale, the detail shown in figure 4a (figure 4c).

From figure 4b it would be apparent that the top surface of the water delivery 2 and bottom surface of the control handle 3 are parallel to one another as the spacer elements 4 bear on the top surface of the water deliver 2, that the control handle 3 has a length shorter than that of the water delivery 2 and that the spacer elements 4, also shown in figure 4a and better shown in the enlarged detail of figure 4c, are clamped to the free end portion of the handle 3 and bear on the outer surface of the water delivery assembly 2 at said recess 5.

Figure 4c schematically shows, on an enlarged scale, the detail shown in figure 4a; in figure 4c, in particular, are clearly shown the spacer elements 4, arranged between the water delivery assembly 2 and control handle 3 and clamped or fixed to the free end portion of the control handle 3.

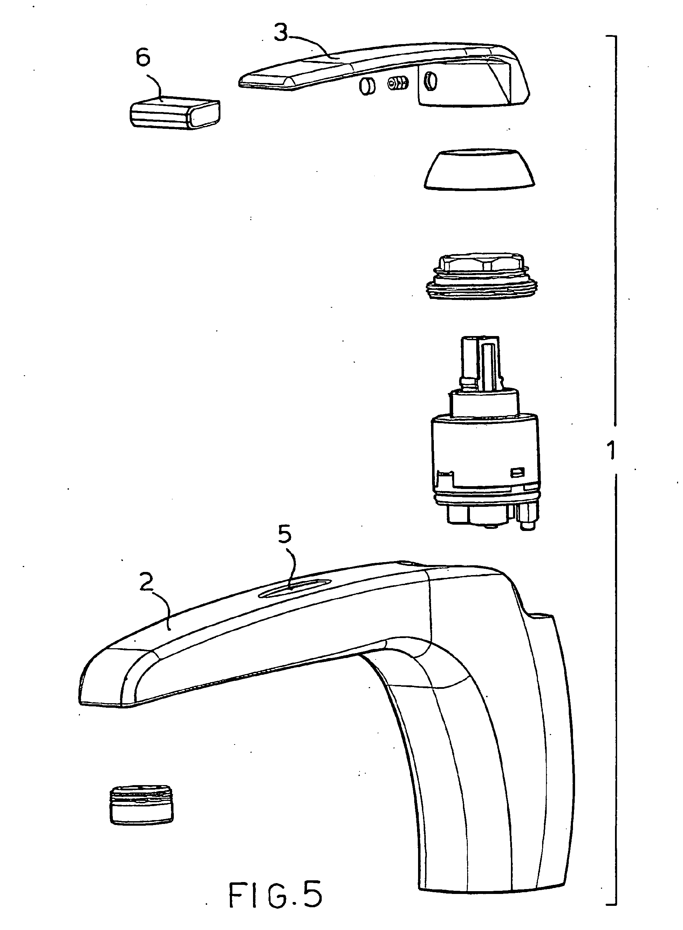

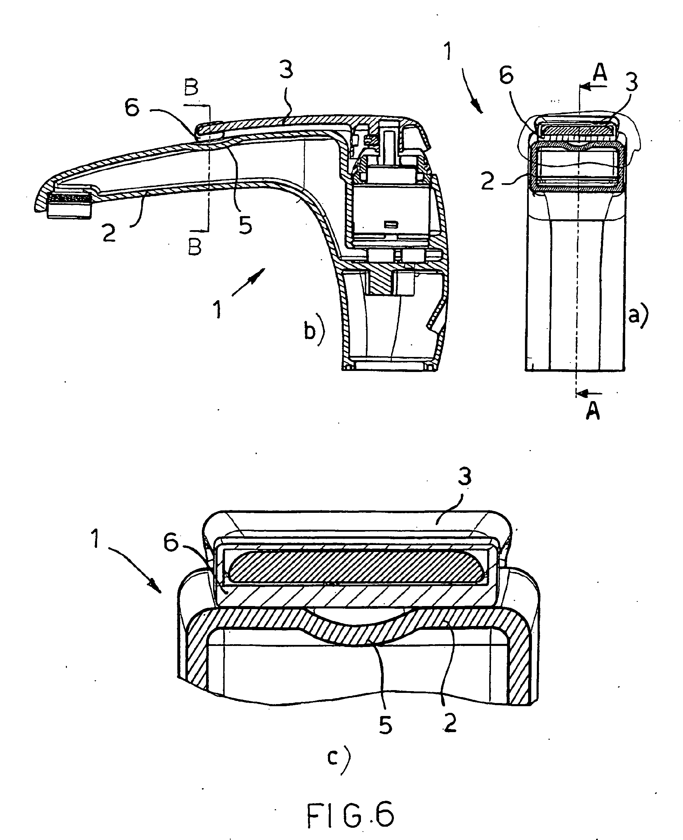

Figure 5 schematically shows a perspective exploded view of a third embodiment of a faucet-mixer device 1 according to the present invention, differing from the second above disclosed embodiment essential by the fact that at least a spacer element comprises a cap element 6 threaded on the free end portion of the handle 3, as better shown in figure 6b.

Figure 6 schematically shows a front view (figure 6a) of the faucet-mixer device 1 of figure 5, as cross-sectioned according to the section plane B-B of figure 6b, a cross sectional view (figure 6b) thereof substantially taken along the plane A-A of figure 6a and further shows, on an enlarged scale, the detail shown in figure 6a (figure 6c).

From figure 6b it should be apparent that the cap element 6, shown in cross section in figure 6a and in the enlarge detail of figure 6c, is threaded on the free end portion of the control handle 3 and bears on the outer surface of the hot water delivery 2 at said recess 5.

Figure 6c schematically shows, on an enlarged scale, the detail shown in figure 6a; figure 6c clearly shows the cap element 6 arranged between the water delivery assembly 2 and control handle 3 and threaded on the free end portion of the handle 3.

Without departing from the scope of the invention, the cap element 6 may be threaded on the free end portion of the handle 3 of the faucet-mixer device 1 shown in figures 1 and 2.

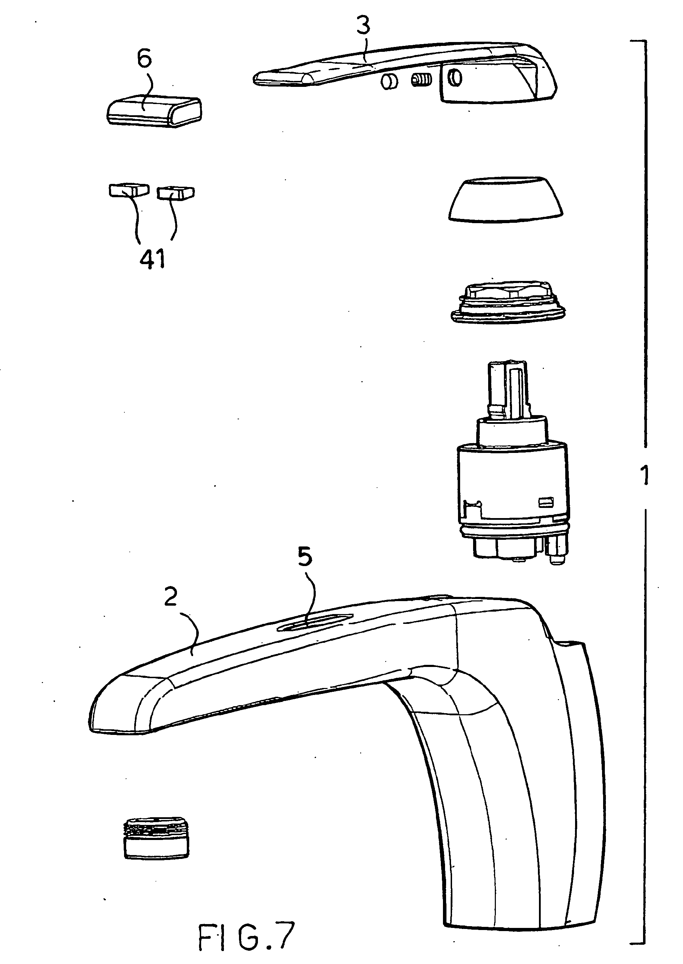

Figure 7 schematically shows a perspective exploded view of a fourth embodiment of a faucet-mixer device 1 according to the present invention, differing from the above disclosed third embodiment thereof essentially by the fact that to the cap element 6 threaded on the free end portion of the control handle 3, is applied.at least a spacer element 41, preferably analogous to the spacer elements 4 shown in figures 1 to 4.

In figure 7 are shown two parallelepiped-shape spacer elements 41 to be applied to the cap element 6 but, without departing from the scope of the invention, it would be possible to apply to said cap element 6 either one or more spacer elements 41 of any desired shape, having, preferably, different colors for conventionally indicating the direction the control handle 3 must be turned toward to cause hot water respectively cold water to be delivered from the faucet.

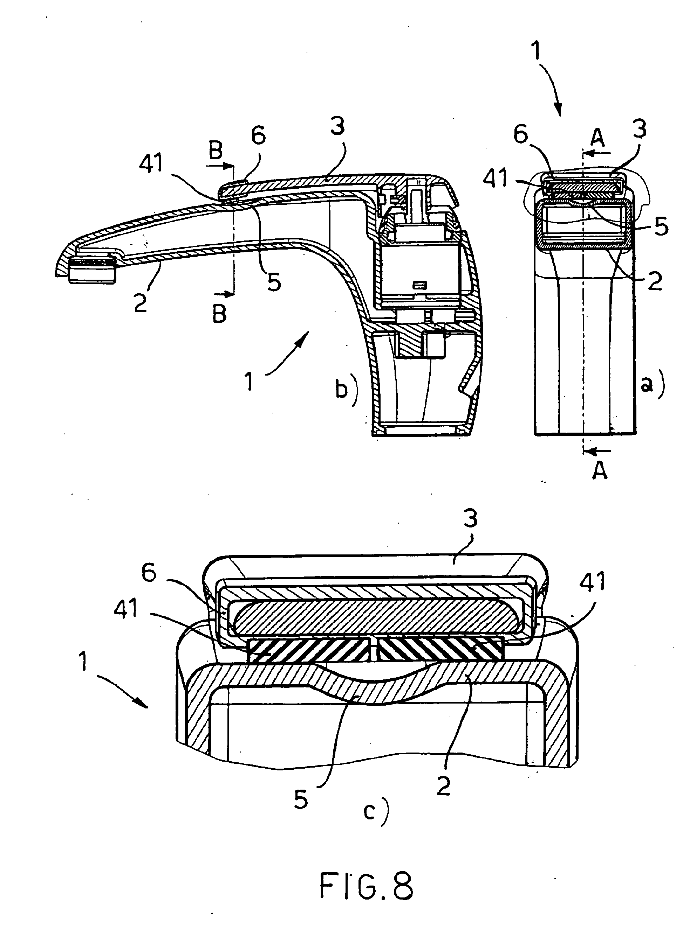

Figure 8 schematically shows a front view (figure 8a) of the faucet-mixer device 1 of figure 7, as cross-sectioned according to the section plane B-B of figure 8b, a cross sectional view (figure 8b) thereof substantially taken along the section plane A-A of figure 8a and further shows, on an enlarged scale, the detail shown in figure 8a (figure 8c).

From figure 8b it should be apparent that the cap element 6 is threaded onto free end portion of the control handle 3 and bears the spacer elements 41 in turn bearing on the outer surface of the water delivery 2 at said recess 5, also shown in figure 8a and better shown in the enlarged detail of figure 8c.

Figure 8c schematically shows, on an enlarged scale, the detail shown in figure 8a; in figure 8c it is clearly possible to see the cap element 6 threaded on the free end portion of the control handle 3 as well as the spacer elements 41, arranged between the water delivery assembly 2 and cap element 6 threaded on the end portion of the control handle 3.

Without departing from the scope of the invention, the cap elements 6 bearing the spacer elements 41 may also be threaded on the free end portion of the handle 3 of the faucet-mixer device 1 shown in figures 1 and 2.

## Claims

1. A faucet-mixer device (1) comprising an elongated water delivery assembly (2) and a body, integral or rigid with said water delivery assembly (2), inside of which is arranged a mixer device controlled by an elongated, preferably flat, control handle (3), arranged on the top of said water delivery assembly (2) **characterized in that**, on a surface of said control handle (3) facing said water delivery assembly (2) of said faucet-mixer device (1) there is applied at least a spacer element (4, 6, 41) designed for preventing said control handle (3) from contacting said water delivery assembly (2), said spacer element (4, 6) being applied to a free end portion of said control handle (3).

2. A faucet-mixer device (1), according to claim 1, **characterized in that** said spacer element (4, 6, 41) is made of a soft material.

3. A faucet-mixer device (1), according to claim 2, **characterized in that** said spacer element (4, 6, 41) is made of a plastics material.

4. A faucet-mixer device (1), according to claim 2, **characterized in that** said spacer element (4, 6, 41) is made of a rubber material.

5. A faucet-mixer device (1), according to claim 4 **characterized in that** a top surface of said water delivery assembly (2) and a bottom surface of said control handle (3) are parallel to one another as said spacer element (4, 6, 41) bears on said top surface of said water delivery assembly (2).

6. A faucet-mixer device (1), according to claim 1, **characterized in that** on a surface of said control handle (3) facing said water delivery assembly (2) two said spacer elements (4, 41) are applied.

7. A faucet-mixer device (1), according to claim 6, **characterized in that** said two spacer elements (4, 41) have different colors.

8. A faucet-mixer device (1), according to claim 7, **characterized in that** said two different color spacer elements (4, 41) are so designed as to conventionally indicate a direction said control handle (3) must be turned for causing said faucet-mixer device (1) to deliver hot water respectively cold water.

9. A faucet-mixer device (1), according to claim 1, **characterized in that** said at least a spacer element comprises a cap element (6) threaded on said free end portion of said control handle (3).

10. A faucet-mixer device (1), according to claim 1, **characterized in that** said at least a spacer element comprises a cap element (6) threaded onto said free end portion of said control handle (3) and at least a spacer element (41) arranged between said cap element (6) and top surface of said water delivery assembly (2).

11. A faucet-mixer device (1), according to claim 1, wherein said top surface of said water delivery assembly (2) has a curved configuration, the control handle (3) has a length shorter than a length of said water delivery assembly (2) and wherein on said top surface of said water delivery assembly a recess (5) is formed, **characterized in that** said at least a spacer element (4, 6, 41) bears on an outer surface of said water delivery assembly (2) at said recess (5).

## Patentansprüche

1. Wasserhahn-Mischvorrichtung (1), umfassend eine gestreckte Wasseraustrittsbaugruppe(2) und einen Körper, der einstückig oder starr mit der Wasseraustrittsbaugruppe (2) angeordnet ist und in dem eine Mischvorrichtung angeordnet ist, die durch einen gestreckten, vorzugsweise flachen Regelgriff (3) geregelt ist, welcher auf der Wasseraustrittsbaugruppe (2) angeordnet ist, **dadurch gekennzeichnet, dass** auf einer Oberfläche des Regelgriffs (3), die der Wasseraustrittsbaugruppe (2) der Wasserhahn-Mischvorrichtung (1) zugekehrt ist, zumindest ein Abstandselement (4, 6, 41) angebracht ist, dass zum Verhindern gestaltet ist, dass der Regelgriff (3) die Wasseraustrittsbaugruppe (2) berührt, wobei das Abstandselement (4, 6) an einem freien Endabschnitt des Regelgriffs (3) angebracht ist.

2. Wasserhahn-Mischvorrichtung (1) nach Anspruch 1, **dadurch gekennzeichnet, dass** das Abstandselement (4, 6, 41) aus einem weichen Material hergestellt ist.

3. Wasserhahn-Mischvorrichtung (1) nach Anspruch 2, **dadurch gekennzeichnet, dass** das Abstandselement (4, 6, 41) aus einem Kunststoffmaterial hergestellt ist.

4. Wasserhahn-Mischvorrichtung (1) nach Anspruch 2, **dadurch gekennzeichnet, dass** das Abstandselement (4, 6, 41) aus einem Kautschukmaterial hergestellt ist.

5. Wasserhahn-Mischvorrichtung (1) nach Anspruch 4, **dadurch gekennzeichnet, dass** eine obere Oberfläche der Wasseraustrittsbaugruppe (2) und eine untere Oberfläche des Regelgriffs (3) parallel zueinander sind, wenn das Abstandselement (4, 6, 41) auf der oberen Oberfläche der Wasseraustrittsbaugruppe (2) aufliegt.

6. Wasserhahn-Mischvorrichtung (1) nach Anspruch 1, **dadurch gekennzeichnet, dass** auf einer Oberfläche des Regelgriffs (3), die der Wasseraustrittsbaugruppe (2) zugekehrt ist, zwei Abstandselemente (4, 41) angebracht sind.

7. Wasserhahn-Mischvorrichtung (1) nach Anspruch 6, **dadurch gekennzeichnet, dass** die zwei Abstandselemente (4, 41) unterschiedliche Farben aufweisen.

8. Wasserhahn-Mischvorrichtung (1) nach Anspruch 7, **dadurch gekennzeichnet, dass** die zwei verschiedenfarbigen Abstandselemente (4, 41) derart gestaltet sind, dass sie auf herkömmliche Weise eine Richtung anzeigen, in der der Regelgriff (3) gedreht werden muss, um zu bewirken, dass die Wasserhahn-Mischvorrichtung (1) heißes Wasser bzw. kaltes Wasser abgibt.

9. Wasserhahn-Mischvorrichtung (1) nach Anspruch 1, **dadurch gekennzeichnet, dass** das zumindest eine Abstandselement ein Deckelelement (6) umfasst, das über Gewinde auf dem freien Endabschnitt des Regelgriffs (3) angebracht ist.

10. Wasserhahn-Mischvorrichtung (1) nach Anspruch 1, **dadurch gekennzeichnet, dass** das zumindest eine Abstandselement ein Deckelelement (6), das über Gewinde auf dem freien Endabschnitt des Regelgriffs (3) angebracht ist, und zumindest ein Abstandselement (41) umfasst, das zwischen dem Deckelelement (6) und der oberen Oberfläche der Wasseraustrittsbaugruppe (2) angeordnet ist.

11. Wasserhahn-Mischvorrichtung (1) nach Anspruch 1, wobei die obere Oberfläche der Wasseraustrittsbaugruppe (2) eine gekrümmte Konfiguration aufweist, der Regelgriff (3) eine Länge aufweist, die kürzer als eine Länge der Wasseraustrittsbaugruppe (2) ist, und wobei auf der oberen Oberfläche der Wasseraustrittsbaugruppe eine Aussparung (5) ausgebildet ist, **dadurch gekennzeichnet, dass** zumindest ein Abstandselement (4, 6, 41) auf einer Außenfläche der Wasseraustrittsbaugruppe (2) an der Aussparung (5) aufliegt.

## Revendications

1. Dispositif de robinet mélangeur (1) comprenant un ensemble allongé de distribution d'eau (2) et un corps, intégré ou en une seule pièce avec ledit ensemble de distribution d'eau (2), à l'intérieur duquel est agencé un dispositif mélangeur commandé par une poignée de commande (3) allongée de préférence plate, agencée sur le dessus dudit ensemble de distribution d'eau (2) **caractérisé en ce que**, sur une surface de ladite poignée de commande (3) faisant face au dit dispositif de distribution d'eau (1) du dit robinet mélangeur (1) où il est appliqué au moins un élément d'espacement (4, 6, 41) conçu pour empêcher ladite poignée de commande (3) de se trouver en contact avec ledit ensemble de distribution d'eau (2), ledit élément d'espacement (4,6) étant appliqué à une portion d'extrémité libre de ladite poignée de commande (3).

2. Dispositif de robinet mélangeur (1) selon la revendication 1, **caractérisé en ce que** ledit élément d'espacement (4, 6, 41) est constitué d'un matériau mou.

3. Dispositif de robinet mélangeur (1) selon la revendication 2, **caractérisé en ce que** ledit élément d'espacement (4, 6, 41) est constitué de matière plastique.

4. Dispositif de robinet mélangeur (1) selon la revendication 2, **caractérisé en ce que** ledit élément d'espacement (4, 6, 41) est constitué de caoutchouc.

5. Dispositif de robinet mélangeur (1) selon la revendication 4, **caractérisé en ce qu'**une surface supérieure dudit ensemble de distribution d'eau (2) et une surface inférieure de ladite poignée de commande (3) sont parallèles l'une à l'autre, alors que ledit élément d'espacement (4, 6, 41) appuie sur ladite surface supérieure dudit ensemble de distribution d'eau (2).

6. Dispositif de robinet mélangeur (1) selon la revendication 1, **caractérisé en ce que**, sur une surface de ladite poignée de commande (3) faisant face au dit ensemble de distribution d'eau (2), sont appliqués deux dits éléments d'espacement (4, 41).

7. Dispositif de robinet mélangeur (1) selon la revendication 6, **caractérisé en ce que** lesdits deux éléments d'espacement (4, 41) ont des couleurs différentes.

8. Dispositif de robinet mélangeur (1) selon la revendication 7, **caractérisé en ce que** lesdits deux éléments d'espacement (4, 41) de couleurs différentes sont conçus de façon à traditionnellement indiquer une direction dans laquelle ladite poignée de commande (3) doit être tournée pour que ledit dispositif de robinet mélangeur(1)distribue de l'eau chaude et respectivement de l'eau froide.

9. Dispositif de robinet mélangeur (1) selon la revendication 1, **caractérisé en ce que** au moins un élément d'espacement comprend un élément de coiffe (6) fileté sur ladite portion d'extrémité libre de ladite poignée de commande (3).

10. Dispositif de robinet mélangeur (1) selon la revendication 1, **caractérisé en ce que** au moins un élément d'espacement comprend un élément de coiffe (6) fileté sur ladite portion d'extrémité libre de ladite poignée de commande (3) et au moins un élément d'espacement (41) agencé entre ledit élément de coiffe (6) et ladite surface supérieure dudit ensemble de distribution d'eau (2).

11. Dispositif de robinet mélangeur (1) selon la revendication 1, dans lequel ladite surface supérieure dudit ensemble de distribution d'eau (2) présente une configuration courbe, la poignée de commande (3) a une longueur plus courte que la longueur dudit ensemble de distribution d'eau (2) et dans lequel sur ladite surface supérieure dudit ensemble de distribution d'eau est formé un évidement (5), **caractérisé en ce que** au moins un élément d'espacement (4, 6, 41) appuie sur une surface extérieure dudit ensemble de distribution d'eau (2) au niveau dudit évidement (5).
